# EUROPEAN PATENT SPECIFICATION

(11) **EP 0 606 674 B1**
(45) Date of publication and mention of the grant of the patent: **28.07.1999**
(21) Application number: 93203317.8
(22) Date of filing: 26.11.1993
(51) Int. Cl.: G06F 15/78, G06F 7/544

(54) **Processor for uniform operations on respective series of successive data in respective parallel data streams**
Prozessor für gleichförmige Operationen auf Datenreihenfolgen in entsprechenden parallelen Datenströmen
Processeur réalisant des opérations uniformes sur des suites de données successives dans des flux de données parallèles

(30) Priority: 04.12.1992 EP 92203765
(43) Date of publication of application: 20.07.1994
(73) Proprietor: Koninklijke Philips Electronics N.V., 5621 BA Eindhoven (NL)
(72) Inventor: Repko, Willem Leendert, NL-5656 AA Eindhoven (NL)
(74) Representative: Groenendaal, Antonius Wilhelmus Maria

(56) References cited:
- EP-A- 0 169 030
- EP-A- 0 380 099
- EP-A- 0 388 300
- US-A- 4 272 828
- IEEE TRANSACTIONS ON CONSUMER ELECTRONICS vol. 35, no. 4 , November 1989 , NEW YORK US pages 785 - 791 Y. MATSUSHITA ET AL 'A 32/24 bit digital audio signal processor'

## Description

### FIELD OF THE INVENTION

The invention relates to a data processing system for processing parallel first and second sequences of successive first and successive second data, respectively. The system comprises a memory means, having a memory input to receive the first and second data for storage; and an operating means coupled to a memory output of the memory means to receive a predetermined number of selected ones of the stored first data or the predetermined number of selected ones of the stored second data supplied by the memory means, and for operating thereon.

### BACKGROUND ART

Such a system is known from Philips' IC TDA 1307, for use in a stereo audio processing circuit. The operating means of the known IC includes a transversal filtering means to filter audio samples from both a right hand side channel and a left hand side channel. Filtering is performed by way of a transversal filter. That is, respective successive samples are multiplied by respective coefficients and thereupon summed to implement a convolution. The filter function typically is a symmetric function, e.g., sync(y)=sin(y)/y .

Since the used filter function is evenly symmetrical, samples to be filtered preferably are functionally grouped into pairs, each respective pair being associated with a respective single one of the filter coefficients. Accordingly, by first forming the sum for each such pair and thereupon multiplying the sum by the associated coefficient, a multiplication is saved for each such pair. Note that the same approach holds true for an odd filter function.

In order to perform the summing operation, it is required that in each cycle the two samples constituting such a pair, either originating from the left hand side channel or from the right hand side channel, are made available simultaneously. This could be achieved by using a single multiport-RAM in order to store the samples and to thereupon provide the required samples in parallel. This architecture, however, would represent a relatively expensive solution. As an economic alternative, the prior art employs two physically separated RAMs, one for storing the most recent half of the successive samples, both right hand side and left hand side, to be multiplied by the associated filter coefficients and another one for storing the earlier half of the successive samples to be multiplied by the same coefficients.

Although the known architecture functions perfectly well, it entails some less advantageous features. First, the use of two separate RAMs requires a relatively larger substrate area than the use of a single RAM, owing to, among other things, the duplication of memory control circuitry, and of signal and power supply leads. Second, additional circuitry is needed to repetitively transfer the recent samples, stored in the recent-sample-RAM, to the earlier-sample-RAM when they have attained the status of "earlier samples". This not only gives rise to additional substrate area and additional power consumption, but also needs extra cycles during which the filtering operation itself is to be put on hold or idles. Third, the processing of samples is performed in repetitive cycles, the order of handling right hand side samples and left hand side samples being distributed non-uniformly during each cycle. As a result, retrieval control is somewhat complicated.

### OBJECT OF THE INVENTION

It is therefore an object of the invention to provide a data processing system as introduced in the preamble above that permits a smaller and simpler implementation that is more time efficient as idling is reduced.

### SUMMARY OF THE INVENTION

To achieve this goal, the invention provides a data processing system for processing parallel first and second sequences of successive first and successive second data, respectively. The system comprises a memory means, having a memory input to receive the first and second data for storage; and an operating means coupled to a memory output of the memory means to receive a predetermined number of selected ones of the stored first data or the predetermined number of selected ones of the stored second data supplied by the memory means, and for operating thereon. According to the invention, the memory means is operative to store the first and second data, which are provided in parallel at the memory input, as first and second fields of a single word, each word being retrievable upon a single access. In addition, the system comprises a re-arrangement means, connected between the memory output and the operating means, for receiving particular words and for alternately and in parallel providing the predetermined number of successive first data and the predetermined number of successive second data to the operating means.

The invention is based on the insight that the data (or signal samples) provided in each of the sequances undergo substantially uniform operations. By using a memory operative to store a first data and a second data, which were supplied in parallel to the memory input, together as fields of a single word and re-arranging the order of sample handling upon retrieval, one single memory suffices. Consequently, the system of the invention needs less peripheral circuitry than the prior art, needs fewer memory accesses than in the prior art as data transfers among memories are absent, functions under control of a reduced instruction set, and has simplified memory control.

In a preferred embodiment of the invention, the operating means includes a dyadic operator means operative to apply dyadic operator, and the predetermined number equals two. This embodiment is typically useful as stereo audio equipment, wherein one channel supplies the data for the left hand side and the other channel for the right hand side speakers.

Preferably, the re-arrangement means comprises a module having: first and second data inputs connected to the memory output to receive the particular word; a first multiplexer with a first multiplexer input connected to the first data input; a first register with a register input connected to the second data input, and with a first register output connected to a second multiplexer input of the first multiplexer; a second multiplexer having a first multiplexer input connected to the first register output and having a second multiplexer input connected to the first data input, and having a second multiplexer output to the dyadic operator means; and a second register having a second register input connected to an output of the first multiplexer, and having a second register output connected to the dyadic operator means.

This embodiment merges functionalities of its components since it uses its registers and multiplexers for both the first and the second fields.

### BRIEF DESCRIPTION OF THE DRAWING

The invention is explained by way of example and with reference to the accompanying drawing, wherein:
Fig. 1 illustrates a first block diagram of the system in the invention;
Fig. 2 gives a second block diagram of a system in the invention; and
Fig. 3 shows a third block diagram of a system in the invention.

### DETAILED DESCRIPTION OF THE EMBODIMENTS

### First block diagram

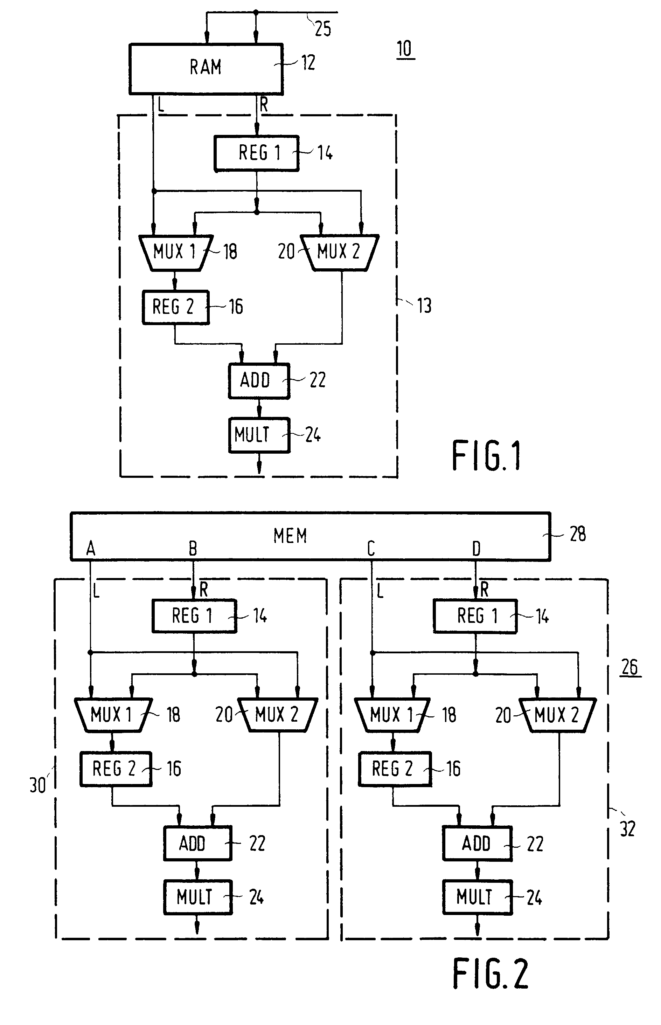

Fig. 1 illustrates a data processing system 10 in the invention. System 10 operates synchronously, that is, under clock signal control. System 10 includes a memory 12, e.g., a RAM, and a module 13. Module 13 includes first and second registers 14 and 16, first and second multiplexers 18 and 20, an adder 22 and a multiplier 24. Memory 12 is operative to store at each respective one of a plurality of addresses both a respective sample L and a respective sample R, received in parallel via a bus 25.

Memory 12 supplies samples L to either adder 22 via second multiplexer 20 or to second register 16 via first multiplexer 18. Memory 12 supplies samples R to register 14. Register 14 furnishes samples R to either second register 16 via first multiplexer 18 or adder 22 via second multiplexer 20.

During a first clock cycle T1, memory 12 is accessed to provide a sample pair, L1 and R1. Sample L1 is supplied to second register 16 via first multiplexer 18, and sample R1 is supplied to first register 14. At the end of the first cycle, first second register 16 stores sample L1, whereas first register 14 stores sample R1.

During a next, second clock cycle following operations are performed. Sample L1 stored in second register 16 is supplied to adder 22, and sample R1 in first register 14 is routed to second register 16 via first multiplexer 18. Memory 12 is accessed to supply a second pair of samples L2 and R2. Sample L2 is transferred via second multiplexer 20 to adder 22, and sample R2 is stored in first register 14. Adder 22 then provides L1+L2 at its output.

During a next, third clock cycle, following operations take place. The sum (L1+L2) is multiplied by a particular coefficient in multiplier 24. Sample R1 stored in second register 16 is supplied to adder 22, and sample R2 in first register 14 is routed to adder 22 via second multiplexer 20. Adder 22 then provides R1+R2 at its output. Memory 12 is accessed to supply a third pair of samples L3 and R3. Sample L3 is supplied to second register 16 via first multiplexer 18, and sample R3 is supplied to first register 14. At the end of the third cycle, second register 16 stores sample L3, whereas first register 14 stores sample R3.

During the next, fourth cycle, multiplier 24 multiplies (R1+R2) by a specified coefficient. Further operations in the fourth and further cycles are similar to those as mentioned above, mutatis mutandis with regard to the further individual samples.

The effect is that in a series of successive clock cycles scaled sums of two L samples and scaled sums of two R samples are produced alternately, i.e., each clock cycle effectively stands for one addition and one multiplication. Pipelining may be used to distribute single operations among several clock cycles, without affecting the result of one addition and one multiplication effectively per clock cycle.

### Second example

Fig. 2 illustrates that above strategy is easily extended to a system 26 handling any even number 2N of samples stored at the same address of a memory 28. In the example shown in Fig. 2, N equals 2. The samples are then to be supplied in N pairs to N modules (30,32) arranged in parallel, each such module including first and second registers 14 and 16, first and second multiplexers 18 and 20, an adder 22 and a multiplier 24. For example, memory 12 stores at each single address four samples A, B, C and D. Then two structures, each containing first and second registers 14 and 16, first and second multiplexers 18 and 20, an adder 22 and a multiplier 24 are connected to memory 12. In a series of successive clock cycles scaled sums of two A samples and scaled sums of two C samples are produced simultaneously during even numbered clock cycles, and scaled sums of two B samples and scaled sums of two D samples are produced during odd numbered clock cycles.

### Third example

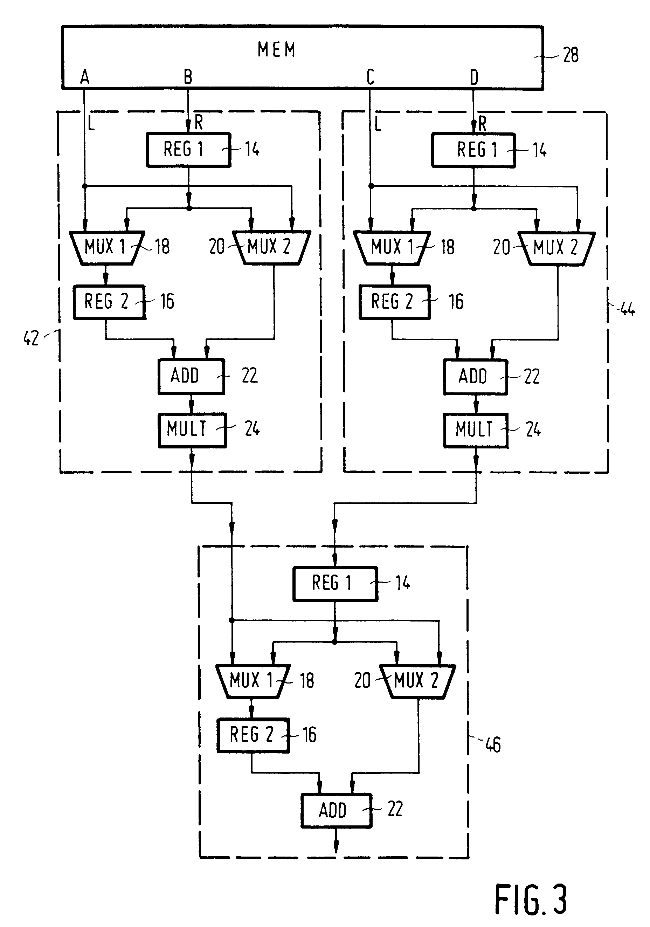

Fig. 3 shows an example of the system 40 in the invention, including a layered arrangement of modules 42, 44 and 46 to process successively supplied multiples of samples A, B, C and D that are provided in parallel. Each of modules 42, 44 and 46 includes first and second registers 14 and 16, first and second multiplexers 18 and 20, and an adder 22. Modules 42 and 44 each include a multiplier 24 and are arranged in parallel to receive pairs of A and B samples and pairs of C and D samples, respectively. As explained above, module 42 then alternately provides at an output of its adder 22 sums of two successive A samples and sums of successive B samples. Likewise, module 44 alternately provides at an output of its adder 22 sums of two successive C samples and sums of successive D samples. Modules 42 and 44 provide their results in parallel to module 46. Module 46 supplies at an output of its adder 22 sums of two successive samples provided by module 44, i.e., α(A1+A2)+α(B1+B2) and sums of two successive samples furnished by module 44, i.e., β(C1+C2)+β(D1+D2) , wherein the factors α and β are delivered via multipliers 24 of modules 42 and 44, respectively. Note the modular architecture.

In other applications, adder 22 may be replaced by a device performing another dyadic operator, e.g., a multiplication of the operands received via register 16 and multiplexer 20; and that multiplier 24 may be replaced by a further device to operate on the outcome of the device preceding it in the signal path, e.g., a division by two.

The architecture presented in Figs. 2 and 3 may be employed, for instance, in image processing using signal samples arranged in rows and columns of a rectangular window. Rows of samples can then be supplied in parallel to memory 28 for being stored word-wise according to the invention. Each single word is composed of a concatenation of simultaneously available row samples. Filtering, weighting or another linear operation then is performed in the row direction. Columns of the samples can similarly be treated to execute operations in the column direction.

Other applications of the invention may relate to general parallel data processing, wherein each one of parallel streams of data undergoes an operation involving successive data of the same stream.

## Claims

1. A data processing system for processing parallel first and second sequences of successive first and successive second data, respectively, the system comprising:
- a memory means (12), having a memory input to receive the first and second data for storage; and
- an operating means (22,24) coupled to a memory output of the memory means to receive a predetermined number of selected ones of the stored first data or the predetermined number of selected ones of the stored second data supplied by the memory means, and for operating thereon;
characterized in that
- the memory means is operative to store the first and second data provided in parallel at the memory input as first and second fields of a single word, each word being retrievable upon a single access; and
- the system comprises a re-arrangement means (14,16,18,20), connected between the memory output and the operating means, for receiving particular words and for alternately and in parallel providing the predetermined number of successive first data and the predetermined number of successive second data to the operating means.

2. The system of claim 1, wherein the predetermined number equals two, and wherein the operating means includes a dyadic operator means operative to apply a dyadic operator.

3. The system of claim 1 or 2, wherein the re-arrangement means comprises a module having:
- first and second data inputs connected to the memory output to receive the first and second fields of the particular word;
- a first multiplexer (18) with a first multiplexer input connected to the first data input;
- a first register (14) with a register input connected to the second data input, and with a first register output connected to a second multiplexer input of the first multiplexer;
- a second multiplexer (20) having a first multiplexer input connected to the first register output and having a second multiplexer input connected to the first data input, and having a second multiplexer output to the operating means;
- a second register (16) having a second register input connected to an output of the first multiplexer, and having a second register output connected to the operating means.

4. The system of claim 1, 2, or 3 implemented as stereo audio equipment.

## Patentansprüche

1. Datenverarbeitungssystem zum Verarbeiten paralleler erster und zweiter Folgen aufeinanderfolgender erster bzw. zweiter Daten, wobei dieses System die nachfolgenden Elemente umfasst:
- ein Speichermittel (12) mit einem Speichereingang zum Empfangen der ersten und der zweiten Daten zur Speicherung; und
- ein Operationsmittel (22, 24), das mit einem Speicherausgang des Speichermittels gekoppelt ist zum Empfangen einer vorbestimmten Anzahl selektierter Daten der gespeicherten ersten Daten oder der vorbestimmten Anzahl selektierter Daten der gespeicherten zweiten Daten, die von dem Speichermittel geliefert werden, und zum Verarbeiten derselben,
dadurch gekennzeichnet, dass
- das Speichermittel die ersten und die zweiten Daten, die an dem Speichereingang parallel geliefert werden, als ein erstes und ein zweites Feld eines einzelnen Wortes speichert, wobei jedes Wort bei einem einfachen Zugriff zurückgewonnen werden kann; und
- das System ein Neugliederungsmittel (14, 16, 18, 20) umfasst, das zwischen dem Speicherausgang und dem Operationsmittel vorgesehen ist, zum Empfangen spezieller Worte und zum wechselweisen und parallelen Liefern der vorbestimmten Anzahl aufeinanderfolgender erster Daten und der vorbestimmten Anzahl aufeinanderfolgender zweiter Daten zu dem Operationsmittel.

2. System nach Anspruch 1, wobei die vorbestimmte Anzahl gleich zwei ist und wobei das Operationsmittel ein dyadisches Operatormittel aufweist zum Anwenden eines dyadischen Operators.

3. System nach Anspruch 1 oder 2, wobei das Neugliederungsmittel ein Modul enthält mit:
- ersten und zweiten Dateneingängen, die mit dem Speicherausgang verbunden sind zum Empfangen des bestimmten Wortes;
- einem ersten Multiplexer (18) mit einem ersten Multiplexereingang, der mit dem ersten Dateneingang verbunden ist;
- einem ersten Register (14) mit einem Registereingang, der mit dem zweiten Dateneingang verbunden ist, und mit einem ersten Registerausgang, der mit einem zweiten Multiplexereingang des ersten Multiplexers verbunden ist;
- einem zweiten Multiplexer (20) mit einem ersten Multiplexereingang, der mit dem ersten Registerausgang verbunden ist und mit einem zweiten Multiplexereingang, der mit dem ersten Dateneingang verbunden ist, und mit einem zweiten Multiplexerausgang der mit dem dyadischen Operatormittel verbunden ist; und
- einem zweiten Register (16) mit einem zweiten Registereingang, der mit einem Ausgang des ersten Multiplexers verbunden ist und mit einem zweiten Registerausgang, der mit dem dyadischen Operatormittel verbunden ist.

4. System nach Anspruch 1, 2 oder 3, implementiert als Stereo-Audio-Anlage.

## Revendications

1. Système de traitement de données pour le traitement de premières et de deuxièmes séquences parallèles de premières et de deuxièmes données successives, respectivement, le système comprenant:
- un moyen de mémoire (12), possédant une entrée de mémoire pour recevoir les premières et les deuxièmes données en vue de les stocker, et
- un moyen d'exploitation (22,24) couplé à une sortie de mémoire du moyen de mémoire afin de recevoir un nombre prédéterminé de données sélectionnées des premières données stockées ou le nombre prédéterminé de données sélectionnées des deuxièmes données stockées fournies par le moyen de mémoire, et pour fonctionner en fonction de celles-ci, caractérisé en ce que :
- le moyen de mémoire agit pour stocker les premières et deuxièmes données fournies en parallèle à l'entrée de mémoire en tant que premier et deuxième champs d'un mot individuel, chaque mot pouvant être retrouvé par un seul accès; et
- le système comprend un moyen de réarrangement (14,16,18,20), connecté entre la sortie de mémoire et le moyen d'exploitation, pour la réception de mots particuliers et pour fournir en alternance et en parallèle le nombre prédéterminé de premières données successives et le nombre prédéterminé de deuxièmes données successives au moyen d'exploitation.

2. Système suivant la revendication 1, dans lequel le nombre prédéterminé est égal à deux, et dans lequel le moyen d'exploitation comprend un moyen d'opérateur dyadique agissant pour appliquer un opérateur dyadique.

3. Système suivant la revendication 1 ou 2, dans lequel le moyen de réarrangement comprend un module comportant :
- des entrées de premières et de deuxièmes données connectées à la sortie de mémoire afin de recevoir les premier et deuxième champs du mot particulier;
- un premier multiplexeur (18) avec une entrée de premier multiplexeur connectée à l'entrée de premières données;
- un premier registre (14) avec une entrée de registre connectée à l'entrée de deuxièmes données, et avec une sortie de premier registre connectée à une deuxième entrée de multiplexeur du premier multiplexeur;
- un deuxième multiplexeur (20) comportant une première entrée de multiplexeur connectée à la sortie du premier registre et comportant une entrée de deuxième multiplexeur connectée à l'entrée de premières données et comportant une sortie de deuxième multiplexeur au moyen d'exploitation;
- un deuxième registre (16) comportant une deuxième entrée de registre connectée à une sortie du premier multiplexeur, et comportant une deuxième sortie de registre connectée au moyen d'exploitation.

4. Système suivant la revendication 1, 2, ou 3 exécuté comme équipement audio stéréo.
